# EUROPÄISCHE PATENTSCHRIFT

(11) **EP 4 569 600 B1**
(45) Veröffentlichungstag und Bekanntmachung des Hinweises auf die Patenterteilung: **18.03.2026**
(21) Anmeldenummer: 23754131.3
(22) Anmeldetag: 02.08.2023
(51) Int. Cl.: H02K 15/043

(54) **VERFAHREN UND VORRICHTUNG ZUM FORMEN EINER WELLENWICKLUNG**
METHOD AND DEVICE FOR SHAPING A WAVE WINDING
PROCÉDÉ ET DISPOSITIF DE MISE EN FORME D'UN ENROULEMENT ONDULÉ

(30) Priorität: 10.08.2022 DE 102022120094
(43) Veröffentlichungstag der Anmeldung: 18.06.2025
(73) Patentinhaber: Schaeffler Technologies AG & Co. KG, 91074 Herzogenaurach (DE)
(72) Erfinder: REISING, Sebastian, 63755 Alzenau (DE); FREMDT, Roland, 35789 Weilmünster (DE); WITWER, Keith Alan, Markle, Indiana 46770 (US)
(74) Vertreter: Schaeffler Technologies
(86) Internationale Anmeldenummer: PCT/DE2023/100570
(87) Internationale Veröffentlichungsnummer: WO 2024/032849

(56) Entgegenhaltungen:
- DE-A1- 102004 035 084
- DE-A1- 102015 120 661
- US-A1- 2019 260 276

## Beschreibung

Die Erfindung betrifft gemäß dem Oberbegriff ein Verfahren zum Formen einer Wellenwicklung mittels einer flachen, um ihre Längsachse drehbaren Schablone, wobei eine Mehrzahl an parallelen Drähten mittels einer Drahtzuführung senkrecht zur Drehachse der Schablone zugeführt wird, wobei abwechselnd die Drähte durch schrittweises Drehen der Schablone um 180 Grad um diese gewickelt und durch dazwischen erfolgendes seitliches Versetzen relativ zu den bereits gewickelten Drähten zu einer Wellenwicklung geformt werden, wobei beim Wickeln der Drähte die Drahtzuführung den Drähten bis in den Bereich der Schablone folgt. Gegenstand der vorliegenden Erfindung ist auch eine Vorrichtung mit den Merkmalern des Oberbegriffes des Anspruches 7.

Ein solches Verfahren mit einer zugehörigen Vorrichtung ist z.B. aus der DE 10 2015 120 661 A1 bekannt. Es hat sich gezeigt, dass es bei der Durchführung des Verfahrens zu Problemen kommen kann, weil die Drahtzuführung beim Wickeln bis in den Bereich der Schablone ragt und der Wickelvorgang daher nicht bis zum Ideal einer schrittweisen Rotation der Schablone um 180 Grad durchgeführt werden kann, sondern bereits in einem Zwischenstadium von weniger als 180 Grad abgebrochen werden muss. Durch die unvollständig umgebogenen Wickelköpfe ergeben sich Spannungen in den Drähten, die sich mit dem Wickelfortschritt summieren und die Folgeverarbeitung erschweren, da die Wellenwicklung in Statornuten, ggf. unter Zuhilfenahme von Werkzeugen mit Nuten in Zwischenschritten überführt werden müssen.

Die Aufgabe der vorliegenden Erfindung besteht darin, eine bessere Formung der Wickelköpfe bereits während des Herstellvorgangs der Wellenwicklung zu ermöglichen,
Erfindungsgemäß wird die Aufgabe durch eine der eingangs genannten Art gelöst, bei welcher die Schablone beim Wickeln der Drähte zunächst um weniger als 180 Grad gedreht wird, in einem Zwischenschritt ein Nachformen der soeben teilgeformten Wickelköpfe mittels Formbacken erfolgt, anschließend die Drahtzuführung aus dem Bereich der Schablone zurückgezogen wird und schließlich die Schablone zur Endformung der Wickelköpfe auf die 180 Grad weitergedreht wird.

Die erfindungsgemäße Lösung bietet den Vorteil, dass die Drähte in einer Position fixiert und fakultativ nachgeformt werden, in welcher die Schablone noch nicht um die vollständigen 180 Grad gedreht worden ist. Diese Winkelstellung entspricht dem bisher erreichbaren Maximum, zu welchem die Drahtzuführung, die zur Stabilisierung der Drähte während des Biegevorgangs erforderlich ist, mit der sich drehenden Schablone bei einem Weiterdrehen kollidieren würde. Das Nachformen biegt die Drähte dann bereits in eine 180 Gradlage oder darüber hinaus in Bezug auf die auf der Unterseite der Schablone liegende Hälfte des Wickelkopfes. Die Köpfe sind daher fertig geformt, es können sich keine Spannungen in Folge der unvollständigen Biegung im Verlauf des Wickelns aufbauen.

Nach dem Entfernen der Drahtzufuhr kann die Schablone in die Endstellung bis 180 Grad weitergedreht werden, bevor sich dann ein Formgebungsschritt in axialer Richtung in Bezug auf die Längserstreckung der Schablone anschließt.

In einer bevorzugten Weiterbildung des Verfahrens ist vorgesehen, dass die Formbacken bis nach dem Entfernen der Drahtzuführung geschlossen bleiben. Hierdurch wird verhindert, dass von der Drahtzuführung auf die Drähte wirkende Reibkräfte die Wickelköpfe in unerwünschter weise deformieren können.

Um zu verhindern, dass die Formbacken den Ablauf des Wickelverfahrens selbst behindern, ist vorgesehen, dass die Formbacken nur für die Dauer des Formvorgangs in den Eingriffsbereich mit den Drähten gebracht werden.

In einer besonders bevorzugten weiteren Ausgestaltung des Verfahrens ist vorgesehen, dass das Nachformen mittels einer einseitigen oder zwei deckungsgleichen, beidseitige Vertiefungen in der Schablone und entsprechend geformten Formbacken derart erfolgt, dass die Drähte zunächst auf mehr als 180 Grad in Bezug auf die Drahtlage auf der anderen Seite der Schablone umgebogen werden.

Diese Variante berücksichtigt den Umstand, dass die Drähte beim Biegen um die Kante der Schablone nicht ausschließlich plastisch verformt werden, sondern immer auch einen elastischen Formänderungsanteil aufweisen, um den sie zurückfedern oder der als eine Art Federspannung in der Wicklung verbleibt. Das Überbiegen während des Nachformens kompensiert den elastischen Formänderungsanteil, die Drähte können nach dem Entfernen der Formbacken in die Idealposition auf 180 Grad zurückfedern

In der Regel wird der Ablauf vorsehen, dass die Schablone vor dem Nachformen bis zu einem Winkel gedreht wird, in welchem die Drahtführung gerade noch nicht in Kontakt mit der Schablone ist, es sind aber Abweichungen möglich. Typischerweise ist dabei vorgesehen,
dass die Schablone vor dem Nachformen um ca. 175 Grad gedreht wird.

Gegenstand der vorliegenden Erfindung ist auch eine Vorrichtung zum Wickeln von Wellenwicklungen aus einer Mehrzahl mit Hilfe einer Draht-führung parallel zugeführten Drähten, die zunächst senkrecht zur Drehachse einer flachen, schwertförmigen Schablone verlaufen, die mittels einer Antriebsvorrichtung schrittweise drehbar ist, und Mitteln zur Nachformung der Wickelköpfe. Im Sinne der weiter oben bereits genannten Aufgabe, eine Wellenwicklung mit besserer Qualität herzustellen, ist vorgesehen, dass die Mittel zur Nachformung der Wickelköpfe aus einem Formbackenpaar zur Nachformung eines Wickelkopfes bestehen, wobei das Formbackenpaar an einer beweglichen Vorrichtung gehalten sind, die die Formbacken nach dem Unterbrechen eines Wickelvorgangs vor Erreichen einer 180 Graddrehung in den Bereich des Wickelkopfes verbringt und dort den zuletzt erzeugten Wickelkopf gegen die Schablone verklemmt und nachformt, und nach einem Zurückziehen der Drahtzuführung und Lösen des Formbackenpaares dieses wieder aus dem Drehbereich der Schablone entfernt, bevor die Antriebsvorrichtung den Drehvorgang bis 180 Grad abschließt, wobei die Bewegungen der Antriebsvorrichtung, der Drahtzuführung und er beweglichen Vorrichtung mittels einer Steuervorrichtung koordiniert sind.

Erfindungsgemäß sind also Mittel zum Nachformen der Wickelköpfe in der zuvor beschriebenen Art und Weise in die Vorrichtung und deren Betriebsablauf integriert. Nachformvorrichtungen sonstiger Art, wie sie aus dem Stand der Technik bekannt sind, können ggf. entfallen und die mit einer erfindungsgemäßen Vorrichtung hergestellten Wicklungen sind spannungsärmer und formstabiler, so dass sie sich im weiteren Verlauf besser verarbeiten lassen.

Vorzugsweise ist vorgesehen, dass die Steuervorrichtung den Wickelvorgang unterbricht, bevor die Drahtzuführung in Kontakt mit der Schablone gelangt und der Nachformvorgang des zuletzt erzeugten Wickelkopfes in einer Drehwinkelstellung der Schablone von ca. 175 Grad stattfindet dass die Formbacken an einer Formzange ausgebildet sind.

Besonders bevorzugt ist einer Ausführungsform der Vorrichtung, bei welcher die Schablone im Bereich der Wickelköpfe ein oder beidseitig eine Vertiefung aufweist, die im Zusammenwirkung mit Formbacken mit einer korrespondierenden Formgebung eine um mehr als 180 Grad umgebogene Drahtführung ermöglicht. Auf die Vorteile des durch eine Vorrichtung dieser Art ermöglichten Überbiegens der Drähte ist bereits weiter oben im Zusammenhang mit der Beschreibung einer bevorzugten Ausgestaltung des Verfahrens eingegangen worden.

Weitere Merkmale, Einzelheiten und Vorteile der Erfindung ergeben sich aus dem Wortlaut der Ansprüche sowie aus der nachfolgend anhand der Zeichnung beschriebenen Ausführungsbeispiel. Es zeigen:
Fig. 1 a) bis d) eine schematische Abfolge eines Teil-Wickelvorgangs nach dem Stand
Fig. 2 eine schematische Draufsicht auf einen Einzeldraht eines Wickelkopfes;
Fig. 3 eine Seitenansicht des Wickelkopfes aus Fig. 2 nach einem herkömmlichen Teil-Wickelvorgang;
Fig. 4 ein Detail der Biegestelle des Drahtes;
Fig. 5 eine erfindungsgemäße Vorrichtung;
Fig. 6 a) bis f) eine schematische Abfolge des erfindungsgemäßen Teil-Wickelvorgangs;
Fig. 7 eine Seitansicht einer bevorzugten Ausführungsform der Wickelvorrichtung;
Fig. 8 eine vergrößerter Detailansicht X aus Fig. 7.

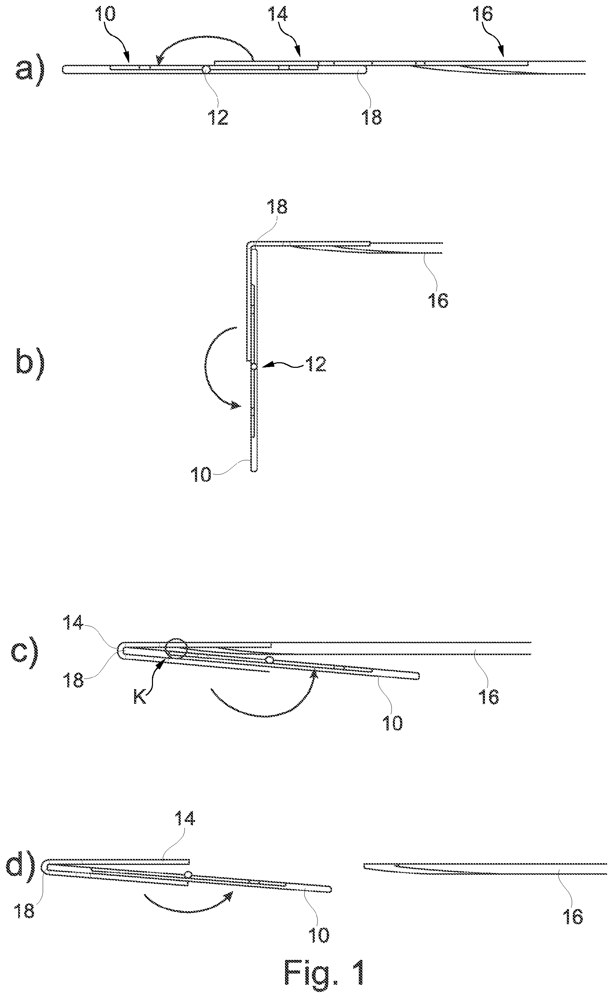

Fig. 1 zeigt die bislang übliche Abfolge eines Teil-Wickelvorgangs beim Herstellen einer flachen Wellenwicklung 20 mit Hilfe einer, flachen, schwertförmigen Schablone 10, die um eine Drehachse 12 drehbar gelagert ist und mittels einer Antriebsvorrichtung (nicht gezeigt) schrittweise gedreht wird, um eine Mehrzahl an Drähten, von denen nur ein Draht 14 gezeigt ist, auf der Schablone 10 aufzuwickeln. Hierbei erfolgt zwischen den Teilwickelvorgängen eine axiale Verschiebung/Verformung der Drähte, so dass die Wellenwicklung am Ende bandförmig ausgebildet ist. Die Drähte 14 werden mit Hilfe einer Drahtzuführung 16 zugeführt und stabilisiert.

Ein Teil-Wickelvorgang erfolgt durch Drehen der Schablone 10 um etwas wenig er als 180 Grad, nachdem zuvor die Drähte vor der Schablone seitlich zu den auf der Schablone liegenden Drähten versetzt worden sind. Die Mitte des hierbei entstehenden geneigten Übergangsbereichs liegt im Bereich einer Biegekante 18 der Schablone 10. Der Übergangsbereich wird durch axiales Versetzen (in Bezug auf die Längserstreckung der Schablone 10) zwischen der Drahtzuführung und einer an der Schablone 10 vorgesehenen Klemmvorrichtung (nicht gezeigt) erzeugt. Dies ist bekannt und kann auch im Rahmen der vorliegenden Erfindung entsprechend umgesetzt werden.

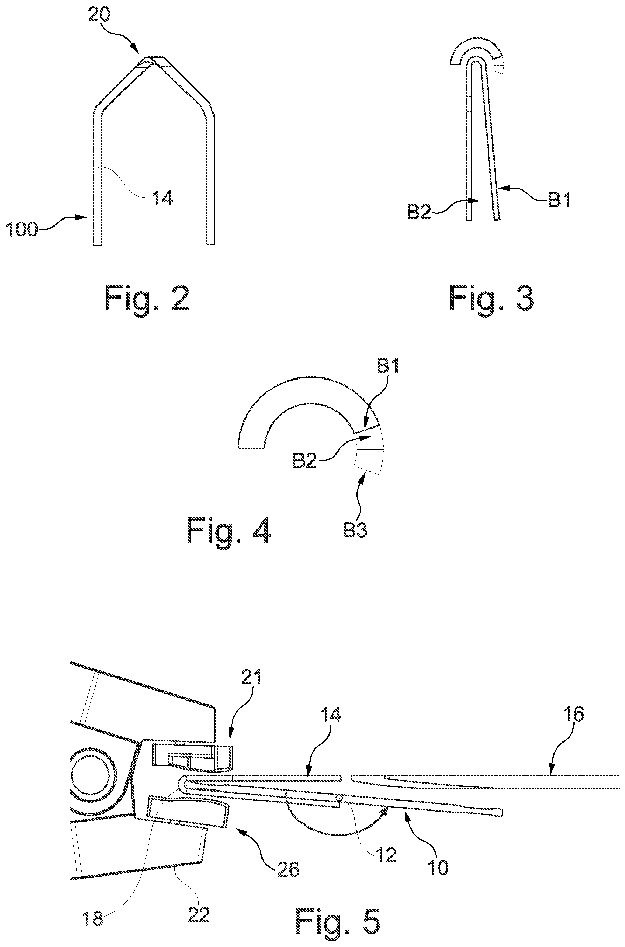

Ausgehend von diesem in Fig. 1 a) gezeigten Zustand wird die Schablone nunmehr im Gegenuhrzeigersinn im Sinne der Darstellung gedreht, wobei Fig. 1 b) eine Zwischenstellung bei 90 Grad Drehwinkel zeigt. Gut zu erkennen ist in Fig. 1 b) die dem Draht folgende Drahtzuführung 16, die ein Verformen des Übergangbereiches verhindert, die für die Ausbildung der Dachform der Wickelköpfe (sieh auch Fig. 2) benötigt wird.

In Fig. 1 c) ist nun ein Zustand gezeigt, in welchem die Rotation der Schablone zunächst bei ca. 175 Grad abgebrochen werden muss, weil die Drahtzuführung 16 bei einem Weiterdrehen mit der Schablone 10 in einem Kollisionspunkt K kollidieren würde. Je nach Geometrie kann der Winkel auch abweichen. Eine Biegung um 180 Grad ist jedoch ausgeschlossen.

In einem weiteren Schritt muss nun die Drahtzuführung 16 zurückgezogen werden (siehe Fig. 1 d)), bevor die Schablone die halbe Umdrehung für diesen Teil-Wicklungsschritt abschließen kann, siehe Fig. 1 e). Hierbei sind die Drähte aber nicht mehr nahe der Biegekante 18 fixiert, so dass diese nicht mehr plastisch verformt werden können. Es bleiben elastische Spannungen im Draht, die sich mit zunehmendem Wickelfortschritt aufsummieren die weitere Verarbeitung der Wellenwicklung nach der Entnahme von der Schablone 10 erschweren. Zudem kann das Entfernen der Drahtzuführung 16 infolge von in die Drähte eingeleiteten Reibkräften zu einer Verformung der Wickelköpfe führen.

In Fig. 2 bis 4 ist der nach einem solchen Teil-Wickelvorgang erzeugte Wickelkopfbereich 20 dargestellt. Fig. 2 veranschaulicht die Form der Wickelköpfe mit der durch den Übergangsbereich ermöglichten und durch das Umbiegen um die Biegekante 18 vollendeten Form. Aus Fig. 3 ist gut zu ersehen, welche Form der Draht in einem spannungsfreien Zustand einnehmen würde. Da sich aber weitere Windungen mit Wickelköpfen anschließen, verbleiben die Spannungen im Draht. Fig. 4 veranschaulicht die Drahtbiegung im Detail. Die mit der bisherigen Praxis erreichbare Biegung B1 ist mit ca. 175° dargestellt, während daneben der für Folgeprozesse gewünschte, theoretische Idealbiegezustand B2 bis 180° gezeigt ist. Ein zu überbiegender Bereich B3 ist an diesen Idealbereich anschließend gezeigt, der erforderlich wäre, um die Rückfederung im Draht zu berücksichtigen.

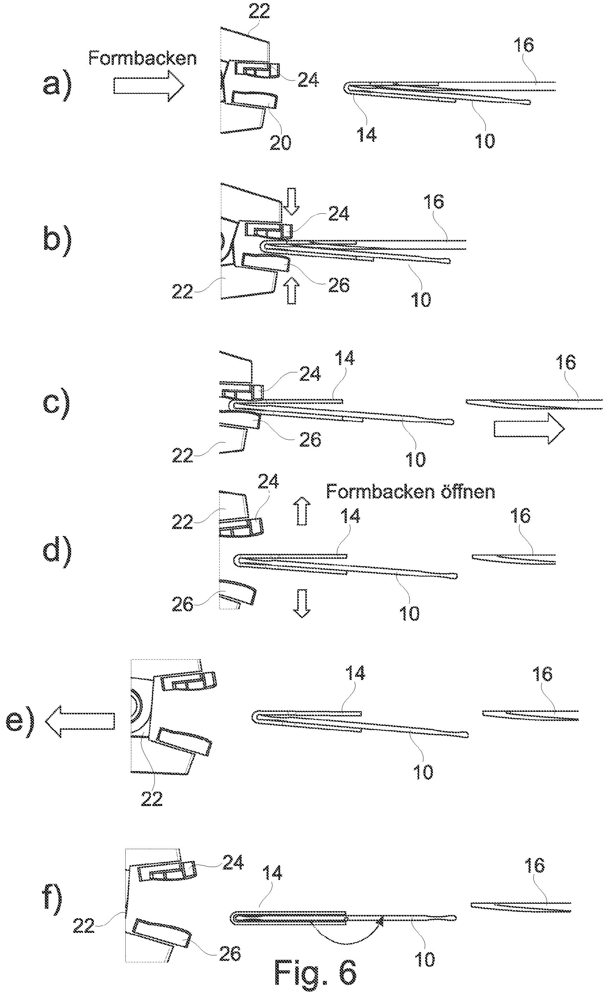

Fig. 5 zeigt eine erfindungsgemäße Vorrichtung, die gegenüber dem Stand der Technik um eine in den Eingriffsbereich mit der Schablone 10 bewegliche Formzange 22 mit zwei Formbacken 24, 26 ergänzt ist. Alle übrigen Teile entsprechen bei dieser einfachen Ausführungsform dem Stand der Technik. Eine Vorrichtung ermöglicht ein Bewegen der Formzange 22 zwischen der in Fig. 5 gezeigten Stellung, in welcher ein Nachformen der zuvor erzeugten Wickelköpfe durch Zusammenpressen der Formbacken 24, 26 ermöglicht ist, und einer zurückgezogenen Stellung (siehe Fig. 6 a), e) und f)), in welcher die Schablone während der Teil-Wickelvorgänge frei drehbar ist.

Fig. 6 zeigt die Schritte des erfindungsgemäßen Verfahrens unter Einsatz der in Fig. 5 gezeigten Vorrichtung.

Die abweichende Abfolge gegenüber dem Stand der Technik ist in Fig. 6 a) gezeigt, die im Prinzip dem Zustand nach Fig. 1 c) entspricht, wenn die Rotation der Schablone 10 zur Biegung der Drähte 14 gestoppt werden muss, um eine Kollision der Drahtzuführung 16 mit der Schablone zu vermeiden.

Abweichend vom Stand der Technik wird nun vor dem Zurückziehen der Drahtzuführung 16 die Formzange 22 in den Eingriffsbereich mit den zuvor gewickelten Drähten gebracht und die Formbacken 24, 26 werden geschlossen. Hierbei werden die Drähte 14 nachgeformt und insbesondere werden die Drähte 14 im Bereich der Biegekante 18 weiter in Richtung der 180 Gradbiegung gebogen. Erst nach diesem Nachformen wird die Drahtzuführung 16 entfernt, wobei die Formbacken 24, 26 geschlossen bleiben, so dass evtl. auf die Drähte 14 während des Entfernens der Drahtzuführung 16 wirkende Reibkräfte die Wickelköpfe nicht deformieren können.

Nach dem Entfernen der Drahtzuführung 16 wird die Formzange 22 geöffnet und zurückgezogen, wobei die im Eingriffsbereich der Formbacken 24, 26 erzeugte Verformung in der Darstellung nicht sichtbar ist.

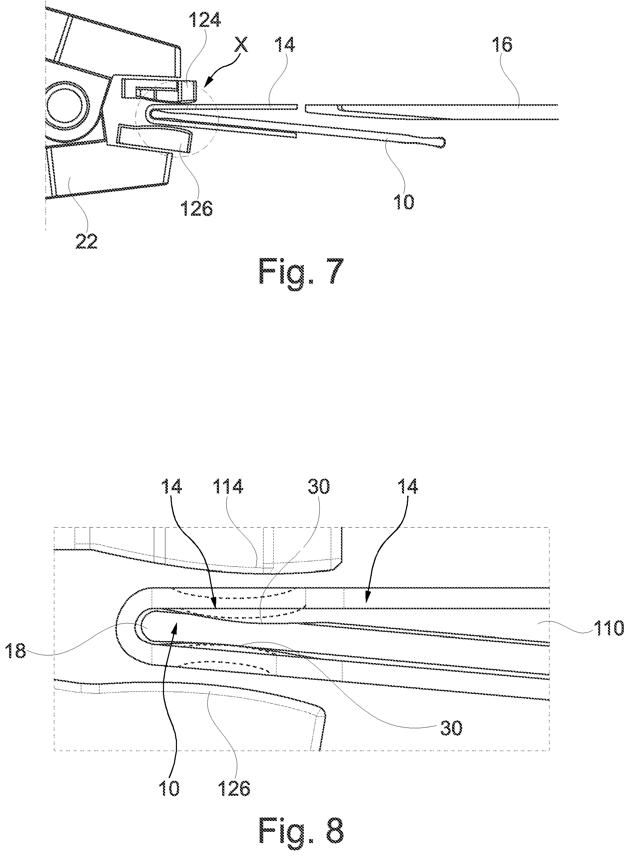

Da die Drähte 14 immer auch einen elastischen Formänderungsanteil aufweisen, der nach dem Entfernen der Formwerkzeuge sich in einem Rückfedern der Drähte oder einer im Draht verbleibenden Spannung äußert, sieht die in Fig. 7 und 8 gezeigte Ausführungsform der Vorrichtung eine Schablone 110 vor, die im Bereich der Wickelköpfe im Nachformbereich Ausnehmungen 30 oder Freimachungen aufweist, die mit entsprechend geformten Formbacken 124, 126 zusammenwirken. Da die Drähte bis in die Ausnehmungen 30 hinein umgebogen werden können, ergibt sich insgesamt ein Biegewinkel im Bereich der Biegekante 18 von mehr als 180 Grad. Man kann hier von einem Überbiegen der Drähte 14 sprechen. Nach dem Entfernen der Formbacken 124, 126 können die Drähte dann in den spannungsfreien Zustand mit dem Ideal entsprechenden Biegewinkel von 180 Grad zurückfedern, so dass die hergestellt Wellenwicklung insgesamt weniger Verspannungen aufweist und sich nachfolgend besser verarbeiten lässt.

Sämtliche aus den Ansprüchen und der Beschreibung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein; der Schutzumfang der Erfindung wird ausschließlich durch die beigefügten Ansprüche definiert.

### Bezugszeichenliste

- 10, 110: Schablone
- 12: Drehachse der Schablone
- 14: Draht
- 16: Drahtzuführung
- 18: Biegekante der Schablone
- 20: Wickelkopf
- 22: Formzange
- 24, 124: Formbacke
- 26, 126: Formbacke
- 30: Ausnehmungen/Freimachungen
- 100: Wellenwicklung

- K: Kollisionspunkt

## Patentansprüche

1. Verfahren zum Formen einer Wellenwicklung mittels einer flachen, um ihre Längsachse drehbaren Schablone (10; 110), wobei eine Mehrzahl an parallelen Drähten (14) mittels einer Drahtzuführung (16) senkrecht zur Drehachse der Schablone (10; 110) zugeführt wird, wobei abwechselnd die Drähte (14) durch schrittweises Drehen der Schablone (10; 110) um diese gewickelt und durch dazwischen erfolgendes seitliches Versetzen relativ zu den bereits auf der Schablone liegenden Drähten (14) zu einer Wellenwicklung (100) geformt werden, wobei beim Wickeln der Drähte (14) die Drahtzuführung (16) den Drähten bis in den Bereich der Schablone (10) folgt, **dadurch gekennzeichnet, dass** die Schablone (10) beim Wickeln der Drähte (14) zunächst um weniger als 180 Grad gedreht wird, in einem Zwischenschritt ein Nachformen der soeben teilgeformten Wickelköpfe (20) mittels Formbacken (24, 26; 124, 126) erfolgt, anschließend die Drahtzuführung (16) aus dem Bereich der Schablone (10) zurückgezogen wird und schließlich die Schablone (10) zur Endformung der Wickelköpfe (20) auf die 180 Grad weitergedreht wird.

2. Verfahren nach Anspruch 1, **dadurch gekennzeichnet, dass** die Formbacken (24, 26; 124, 126) bis nach dem Entfernen der Drahtzuführung (16) geschlossen bleiben.

3. Verfahren nach Anspruch 1 oder 2, **dadurch gekennzeichnet, dass** die Formbacken (24, 26; 124, 126) nur für die Dauer des Formvorgangs in den Eingriffsbereich mit den Drähten (14) gebracht werden.

4. Verfahren nach einem der vorhergehenden Ansprüche, **dadurch gekennzeichnet, dass** das Nachformen mittels einer einseitigen oder zwei deckungsgleichen beidseitige Ausnehmung (30) in der Schablone (10) und entsprechend geformten Formbacken (124; 126) derart erfolgt, dass die Drähte (14) zunächst auf mehr als 180 Grad in Bezug auf die Drahtlage auf der anderen Seite der Schablone (10) umgebogen werden.

5. Verfahren nach einem der vorhergehenden Ansprüche, **dadurch gekennzeichnet, dass** die Schablone (10) vor dem Nachformen bis zu einem Winkel gedreht wird, in welchem die Drahtführung (16) gerade noch nicht in Kontakt mit der Schablone (10) ist.

6. Verfahren nach Anspruch 5, **dadurch gekennzeichnet, dass** die Schablone (10) vor dem Nachformen um ca. 175 Grad gedreht wird.

7. Vorrichtung zum Wickeln von Wellenwicklungen (100) aus einer Mehrzahl mit Hilfe einer Drahtzuführung (16) parallel zugeführten Drähten (14), die zunächst senkrecht zur Drehachse (12) einer flachen, schwertförmigen Schablone (10) verlaufen, die mittels einer Antriebsvorrichtung schrittweise drehbar ist und Mitteln zur Nachformung der Wickelköpfe (20) aufweist, **dadurch gekennzeichnet, dass** die Mittel zur Nachformung der Wickelköpfe (20) aus einem Formbackenpaar (24, 26; 124, 126) zur Nachformung eines Wickelkopfes (20) bestehen, wobei das Formbackenpaar (24, 26; 124, 126) an einer beweglichen Vorrichtung gehalten sind, die die Formbacken (24, 26; 124, 126) nach dem Unterbrechen eines Wickelvorgangs vor Erreichen einer 180 Graddrehung in den Bereich des Wickelkopfes (20) verbringt und dort den zuletzt erzeugten Wickelkopf gegen die Schablone (10) verklemmt und nachformt, und nach einem Zurückziehen der Drahtzuführung (16) und Lösen des Formbackenpaares (24, 26; 124, 126) dieses wieder aus dem Drehbereich der Schablone (10) entfernt, bevor die Antriebsvorrichtung den Drehvorgang bis 180 Grad abschließt, wobei die Bewegungen der Antriebsvorrichtung, der Drahtzuführung (16) und er beweglichen Vorrichtung mittels einer Steuervorrichtung koordiniert sind.

8. Vorrichtung nach Anspruch 7, **dadurch gekennzeichnet, dass** die Steuervorrichtung den Wickelvorgang unterbricht, bevor die Drahtzuführung (16) in Kontakt mit der Schablone (10) gelangt und der Nachformvorgang des zuletzt erzeugten Wickelkopfes (20) in einer Drehwinkelstellung der Schablone (10) von ca. 175 Grad stattfindet.

9. Vorrichtung nach Anspruch 7 oder 8, **dadurch gekennzeichnet, dass** die Formbacken (24, 26; 124, 126) an einer Formzange (22) ausgebildet sind.

10. Vorrichtung nach einem der Ansprüche 7 bis 9, **dadurch gekennzeichnet, dass** die Schablone (10) im Bereich der Wickelköpfe (20) ein oder beidseitig eine Ausnehmung (30) aufweist, die im Zusammenwirkung mit Formbacken (124, 126) mit einer korrespondierenden Formgebung eine um mehr als 180 Grad umgebogene Drahtführung ermöglicht.

## Claims

1. A method for shaping a wave winding by means of a flat former (10; 110) rotatable about its longitudinal axis, wherein a plurality of parallel wires (14) are fed by means of a wire feeder (16) perpendicular to the axis of rotation of the former (10; 110), wherein the wires (14) are wound around the former (10; 110) in an alternating manner by stepwise rotation thereof and shaped into a wave winding (100) by intermediate lateral displacement relative to the wires (14) already lying on the former, wherein the wire feeder (16) follows the wires into the region of the former (10) during the winding of the wires (14), **characterized in that** the former (10) is first rotated by less than 180 degrees during the winding of the wires (14), the partially shaped end windings (20) are reshaped by means of shaping jaws (24, 26; 124, 126) in an intermediate step, then the wire feeder (16) is retracted from the region of the former (10) and finally the former (10) is rotated further to 180 degrees for the final shaping of the end windings (20).

2. The method according to claim 1, **characterized in that** the shaping jaws (24, 26; 124, 126) remain closed until after the wire feeder (16) has been removed.

3. The method according to claim 1 or 2, **characterized in that** the shaping jaws (24, 26; 124, 126) are brought into the engagement region with the wires (14) only for the duration of the shaping process.

4. The method according to any one of the preceding claims, **characterized in that** the reshaping is carried out by means of a recess (30) on one side or two congruent recesses on both sides in the former (10) and correspondingly shaped shaping jaws (124; 126) such that the wires (14) are first bent to more than 180 degrees with respect to the wire layer on the other side of the former (10).

5. The method according to any one of the preceding claims, **characterized in that** the former (10) is rotated before reshaping to an angle at which the wire feeder (16) is not quite yet in contact with the former (10).

6. The method according to claim 5, **characterized in that** the former (10) is rotated by approximately 175 degrees before reshaping.

7. A device for winding wave windings (100) from a plurality of wires (14) fed in parallel by means of a wire feeder (16), which first run perpendicular to the axis of rotation (12) of a flat, blade-like former (10), which can be rotated stepwise by means of a drive device and has means for reshaping the end windings (20), **characterized in that** the means for reshaping the end windings (20) consist of a pair of shaping jaws (24, 26; 124, 126) for reshaping an end winding (20), wherein the pair of shaping jaws (24, 26; 124, 126) are held on a movable device which, after a winding process is interrupted and before a 180-degree rotation is reached, moves the shaping jaws (24, 26; 124, 126) into the region of the end winding (20) and clamps and reshapes the last produced end winding against the former (10), and, after the wire feeder (16) is retracted and the pair of shaping jaws (24, 26; 124, 126) are released, removes said end winding again from the rotation region of the former (10) before the drive device completes the rotation process to 180 degrees, wherein the movements of the drive device, the wire feeder (16) and the movable device are coordinated by means of a control device.

8. The device according to claim 7, **characterized in that** the control device interrupts the winding process before the wire feeder (16) comes into contact with the former (10) and the reshaping process of the last produced end winding (20) is performed in a rotation angle position of the former (10) of approximately 175 degrees.

9. The device according to claim 7 or 8, **characterized in that** the shaping jaws (24, 26; 124, 126) are formed on a pair of shaping pliers (22).

10. The device according to any one of claims 7 to 9, **characterized in that** the former (10) has a recess (30) on one or both sides in the region of the end windings (20), which, in interaction with shaping jaws (124, 126) and a corresponding shaped portion, enables a guided wire portion bent by more than 180 degrees.

## Revendications

1. Procédé de formage d'un enroulement ondulé au moyen d'un gabarit plat (10 ; 110) rotatif autour de son axe longitudinal, dans lequel une pluralité de fils parallèles (14) sont acheminés au moyen d'un guide-fil (16) perpendiculaire à l'axe de rotation du gabarit (10 ; 110), les fils (14) étant enroulés alternativement autour du gabarit (10 ; 110) par rotation progressive de ce dernier et mis en forme en un enroulement ondulé (100) par déplacement latéral intermédiaire par rapport aux fils (14) déjà présents sur le gabarit, dans lequel le guide-fil (16) suit les fils dans la zone du gabarit (10) lors de l'enroulement des fils (14). **caractérisé en ce que** le gabarit (10) est initialement tourné de moins de 180 degrés lors de l'enroulement des fils (14), dans une étape intermédiaire les têtes d'enroulement partiellement formées (20) sont postformées à l'aide de mâchoires de formage (24, 26 ; 124, 126), puis le guide-fil (16) est retiré de la zone du gabarit (10) et enfin le gabarit (10) est tourné de 180 degrés supplémentaires pour le formage final des têtes d'enroulement (20).

2. Procédé selon la revendication 1, **caractérisé en ce que** les mâchoires de formage (24, 26 ; 124, 126) restent fermées jusqu'à ce que le guide-fil (16) ait été retiré.

3. Procédé selon la revendication 1 ou 2, **caractérisé en ce que** les mâchoires de formage (24, 26 ; 124, 126) ne sont amenées dans la zone de mise en prise avec les fils (14) que pendant la durée du processus de formage.

4. Procédé selon l'une quelconque des revendications précédentes, **caractérisé en ce que** le postformage est effectué au moyen d'un évidement (30) unilatéral ou de deux évidements bilatéraux superposables dans le gabarit (10) et de mâchoires de formage (124 ; 126) de forme correspondante de sorte que les fils (14) sont d'abord pliés à plus de 180 degrés par rapport à la position de fil de l'autre côté du gabarit (10).

5. Procédé selon l'une quelconque des revendications précédentes, **caractérisé en ce que** le gabarit (10) est tourné avant le postformage à un angle auquel le guide-fil (16) n'est pas encore en contact avec le gabarit (10).

6. Procédé selon la revendication 5, **caractérisé en ce que** le gabarit (10) est tourné d'environ 175 degrés avant le postformage.

7. Dispositif permettant d'enrouler des enroulements ondulés (100) à partir d'une pluralité de fils (14) acheminés en parallèle à l'aide d'un guide-fil (16), qui s'étendent initialement perpendiculairement à l'axe de rotation (12) d'un gabarit (10) plat en forme d'épée, qui peut être tourné progressivement au moyen d'un dispositif d'entraînement et présente un moyen d'un postformage des têtes d'enroulement (20), **caractérisé en ce que** le moyen de postformage des têtes d'enroulement (20) est constitué d'une paire de mâchoires de formage (24, 26 ; 124, 126) pour le postformage d'une tête d'enroulement (20), la paire de mâchoires de formage (24, 26 ; 124, 126) étant maintenues sur un dispositif mobile, qui transfère les mâchoires de mise en forme (24, 26 ; 124, 126) après l'interruption d'un processus d'enroulement avant d'atteindre une rotation de 180 degrés dans la zone de la tête d'enroulement (20) et serre et postforme à cet endroit la tête d'enroulement générée en dernier contre le gabarit (10), et après un retrait du guide-fil (16) et un relâchement de la paire de mâchoires de mise en forme (24, 26 ; 124, 126) l'éloigne de nouveau de la zone de rotation du gabarit (10), avant que le dispositif d'entraînement n'achève le processus de rotation à 180 degrés, dans lequel les mouvements du dispositif d'entraînement, du guide-fil (16) et du dispositif mobile sont coordonnés au moyen d'un dispositif de commande.

8. Dispositif selon la revendication 7, **caractérisé en ce que** le dispositif de commande interrompt le processus d'enroulement avant que le guide-fil (16) n'entre en contact avec le gabarit (10) et que le processus de postformage de la tête d'enroulement (20) générée en dernier ait lieu dans une position d'angle de rotation du gabarit (10) d'environ 175 degrés.

9. Dispositif selon la revendication 7 ou 8, **caractérisé en ce que** les mâchoires de mise en forme (24, 26 ; 124, 126) sont conçues sur une pince de mise en forme (22).

10. Dispositif selon l'une quelconque des revendications 7 à 9, **caractérisé en ce que** le gabarit (10) présente un évidement (30) sur un ou deux côtés dans la zone des têtes d'enroulement (20), qui, conjointement avec les mâchoires de mise en forme (124, 126) et une mise en forme correspondante, permet un guide-fil plié à plus de 180 degrés.
